# EUROPÄISCHE PATENTSCHRIFT

(11) **EP 2 165 871 B1**
(45) Veröffentlichungstag und Bekanntmachung des Hinweises auf die Patenterteilung: **16.03.2011**
(21) Anmeldenummer: 09011705.2
(22) Anmeldetag: 14.09.2009
(51) Int. Cl.: B60K 6/12, B60W 20/00, B60W 10/24, B60W 10/02

(54) **Verfahren zum Betreiben eines Antriebsstrangs**
Method for operating a drive train
Procédé destiné au fonctionnement d'une chaîne cinématique

(30) Priorität: 18.09.2008 DE 102008047993
(43) Veröffentlichungstag der Anmeldung: 24.03.2010
(73) Patentinhaber: Voith Patent GmbH, 89522 Heidenheim (DE)
(72) Erfinder: Discher, Andreas, 89542 Herbrechtingen (DE); Grözinger, Thomas, 89556 Steinheim (DE)
(74) Vertreter: Schmidt, Sven Hendrik

(56) Entgegenhaltungen:
- EP-A2- 0 366 095
- WO-A1-95/33629
- US-A1- 2006 079 375

## Beschreibung

Die Erfindung betrifft ein Verfahren zum Betreiben eines Antrlebsstrangs, insbesondere für ein Schlenenfahrzeug, nach der im Oberbegriff von Anspruch 1 näher definierten Art.

Ein hydrostatischer Antrieb mit einer Energierückgewinnungsfunktion ist aus dem allgemeinen Stand der Technik bekannt. Beispielhaft wird hierzu auf die WO 2007/076942 A1 verwiesen. Der dortige Aufbau zeigt ein hydrostatisches beziehungsweise hydraulisches System sowie einen entsprechenden Antrieb beispielsweise über eine Brennkraftmaschine. Über einen hydraulischen Kreislauf wird diese Energie entsprechend umgesetzt und treibt dann rein hydraulisch den Abtrieb beispielsweise für ein Nutzfahrzeug wie ein Baustellenfahrzeug oder einen Gabelstapler. Kommt es bei einem mit dem System ausgestatteten Fahrzeug nun zu einem Bremsvorgang, so wird die auftretende Bremsenergie in den Bereich des hydraulischen Systems übertragen und von einer als Pumpe betriebenen hydrostatischen Kolbenmaschine entsprechend verdichtet. Das verdichtete Arbeitsmedium wird dann in einem Speicherelement zwischengespeichert. Für den Antriebsfall kann diese in Form von Druck zwischengespeicherte Energie dann über dieselbe hydrostatische Kolbenmaschine, welche dann motorisch betrieben wird, wieder freigegeben werden, um zu Antriebszwecken zur Verfügung zu stehen.

Problematisch bei diesem Aufbau ist es, das beim Wechsel vom Antriebsfall in den Bremsfall und umgekehrt die hydrostatische Kolbenmaschine jeweils an die Leistung des Antriebs bzw. Abtriebs über das Kolbenelement angekoppelt werden muss. Wird bei einem plötzlich auftretenden Bremsen, beispielsweise in Bergabfahrt, Bremsenergie frei, so wird sich die Welle entsprechend schnell drehen und beim Einkuppeln der hydrostatischen Maschine ist entweder eine aufwendige mechanische Synchronisatlonseinrichtung notwendig, welche dann jedoch einem sehr hohen Verschleiß unterliegt, oder der Verschleiß wird Im Bereich der Kupplung selbst auftreten. Dies wirkt sich dann sehr negativ auf die 2 Lebensdauer eines derartigen Bremssystems mit Energierückgewinnungsfunktion aus, insbesondere bei Systemen mit entsprechend hohen Brems- bzw. Antriebsleistungen, wie sie beispielsweise in schweren Nutzfahrzeugen, Baumaschinen oder insbesondere in Schienenfahrzeugen, wie beispielsweise Rangierlokomotiven oder Triebwagen, auftauchen.

Auch die Dokumente DE 10 2006 043 227 A1 und DE 10 2006 046 965 A1 zeigen gattungsgemäße Verfahren zum Betreiben eines Antriebsstrangs, bei denen das Zuschalten des hydraulischen Antriebs auf alternative Weise durchgeführt wird. Beim erstgenannten Dokument kommt ein verstellbarer Hydromotor in Verbindung mit einem zweistufigen Getriebe zum Einsatz. Gemäß dem zweitgenannten Dokument kommt ein Getriebe mit zwei Kupplungen zum Einsatz.

Es ist die Aufgabe der vorliegenden Erfindung, ein Verfahren anzugeben, mit dem der Betrieb eines Antriebsstrangs so möglich ist, dass im Bremsfall zurückgewonnene Energie eingespeichert und für Antriebszwecke wieder zur Verfügung gestellt werden kann, und welcher einen sehr zuverlässigen Betrieb über eine lange Lebensdauer hinweg ermöglicht.

Erfindungsgemäß wird diese Aufgabe durch das Verfahren mit den Im kennzeichnenden Teil von Anspruch 1 genannten Merkmalen gelöst.

Das Speicherelement wird dabei so betrieben, dass im Antriebsfall, also wenn durch das hydraulische Aggregat Leistung für den Abtrieb zur Verfügung gestellt wird, das Speicherelement jeweils nur zu einem großen Teil, nie jedoch vollständig entleert wird. In dem Speicherelement werden sich also immer ein entsprechender Restdruck und eine Restölmenge befinden. Kommt es nun zum Bremsfall, so wird mit dem im Speicherelement befindlichen Restdruck beziehungsweise mit zumindest einem Teil der Restölmenge oder der gesamten Restölmenge bei geöffneter Kupplung das hydraulische Aggregat entsprechend beschleunigt, so dass sich auch dessen Welle und die mit ihm verbundene Seite des Kupplungselements entsprechend beschleunigt. Bei geöffneter Kupplung muss dabei lediglich die innere Reibung In dem hydraulischen Aggregat übervunden werden. Prinzipiell ist es möglich, eine Kupplung vorzusehen, die im geöffneten Zustand beziehungsweise In einem teilweise geöffneten Zustand, was vorliegt neben einem vollständig geöffneten Zustand auch von der Beschreibung der erfindungsgemäß geöffneten Kupplung umfasst sein soll, einen vorbestimmten Schlupf kleiner als 100 %, was einer vollständigen Öffnungen entspricht, zwischen den beiden Kupplungshälften einstellt. Vorteilhaft wird jedoch eine Trennkupplung
verwendet, welche beide Kupplungshälften vollständig aus einer Triebverbindung miteinander herausnimmt. Das hydraulische Aggregat kann also mit vergleichsweise wenig Druck in genau der Verschaltung, wie sie auch für den Antriebsfall genutzt wird, entsprechend hochbeschleunigt werden. Dadurch kommt es zu einer Anpassung der Drehzahl der mit dem hydraulischen Aggregat verbundenen Seite des Kupplungselements zu der anderen Seite des Kupplungselements, welche aufgrund der über den Abtrieb anliegenden Bremsleistung entsprechend schnell dreht. Sobald eine vorgegebene Mindestdrehzahl der mit dem hydraulischen Aggregat verbundenen Seite des Kupplungselements erreicht ist, wird das Kupplungselement geschlossen und das hydraulische System so geschaltet, dass der Pumpbetrieb beginnt und durch die anliegende Bremsleistung Druckenergie in das Speicherelement 9 eingespeichert werden kann. Die Kupplung kann dabei auch beispielsweise allmählich unter Schlupfausgleich der Kupplungshälften oder in einzelnen Intervallen (getaktet) geschossen werden. Auch ein Betrieb mit Restschlupf ist möglich.

Durch die erfindungsgemäße Drehzahlsynchronisation über in dem Speicherelement zurückgehaltenen Restdruck kann eine Anpassung der Drehzahl der beiden Selten des Kupplungselements erreicht werden, bevor diese geschlossen werden. Typischerwelse muss dafür nicht exakt die gleiche Drehzahl vorliegen, es ist jedoch sinnvoll, die Drehzahlen soweit aneinander anzupassen, dass ein sicheres und zuverlässiges Einkoppeln der beiden Seiten des Kupplungselements ohne Störfunktion und ohne einen hohen Verschleiß in dem Kupplungselement realisiert werden kann.

Das erfindungsgemäße Verfahren kann zur Drehzahlsynchronisation von Kupplungen in allen Antriebssträngen verwendet werden, welche über ein Kupplungselement Bremsleistung über eine dann als Pumpe betriebene hydraulische Maschine in ein Speicherelement einspeichern. Dabei kann der Antriebsstrang, wie im eingangs genannten Stand der Technik beschrieben, in der Art eines seriellen Hybrids ausgebildet sein, es ist jedoch auch ein Antriebsstrang in der Art eines parallelen Hybrids denkbar, bei dem das hydraulische System und beispielsweise eine Verbrennungskraftmaschine als optionales weiteres Antriebsaggregat parallel auf den Abtrieb wirken.

Die Speicherung der rekuperierten Bremsenergie in einem Druckspeicherelement bietet dabei gegenüber alternativen Speichermethoden, wie beispielsweise einer Batterie bei einem Diese/Elektro-Hybrid deutliche Vorteile hinsichtlich der Energiedichte im Speicher und der Möglichkeit, große Leistungen beziehungsweise große Energiemengen In sehr kurzer Zeit einerseits einzuspeichern und andererseits wieder freizugeben, ohne dabei derart große Verluste zu generieren, wie dies in einem Batteriesystem oder elektrischen Hochleistungskondensatoren der Fall wäre.

Weitere vorteilhafte Ausgestaltungen des erfindungsgemäßen Antriebsstrangs ergeben sich aus den Unteransprüchen und aus dem Ausführungsbeispiel, welches nachfolgend anhand der Figuren am Beispiel eines Schienenfahrzeuges detailliert erläutert wird. Die Erfindung ist dabei jedoch für alle Arten von Fahrzeugen anwendbar, zum Beispiel Last- oder Personenkraftwagen, Omnibusse, Baumaschinen, Gabelstapler, Schiffsantriebe und dergleichen. Auch die für das Beispiel gewählte Variante des Parallelhybrids ist nur eine der Möglichkeiten, Die Erfindung ist bei einem seriellen Hybridantrieb oder einem rein hydrostatischen Antrieb ebenso einsetzbar.

Dabei zeigen:
- Figur 1: eine schematische Darstellung des Antriebsstrangs für ein Schienenfahrzeug; und
- Figur 2: den Hydraulikschaltplan des hydraullschen Systems des Antriebsstrangs in einer möglichen Ausführungsform.

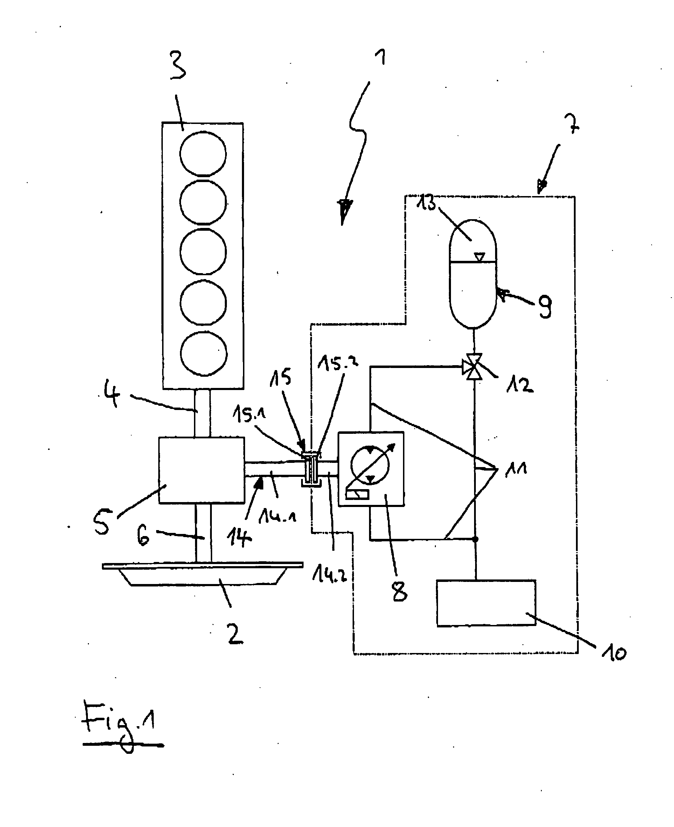

In der Figur 1 ist eine stark schematisierte Ansicht des erfindungsgemäßen Antriebsstrangs 1 zu erkennen. Beispielhaft treibt dieser in dem hier dargestellten Ausführungsbeispiel ein schematlsch angedeutetes angetriebenes Rad 2 als Abtrieb an. Diese Ausgestaltung Ist dabei rein beispielhaft zu verstehen.
Selbstverständlich kann der Antriebsstrang auch dementsprechend eine Achse oder über ein Radsatzgetriebe einen Radsatz entsprechend antreiben, wie dies beispielsweise bei Schienenfahrzeugen allgemein bekannt und üblich ist. Da dieser Teil des Antriebsstrangs 1 jedoch für das Verständnis der Erfindung nicht weiter von Bedeutung ist, wird hier der Aufbau beispielhaft anhand des angetriebenen Rades 2 dargestellt und erläutert.

Außerdem weist der Antriebsstrang 1 in der Figur 1 eine schematisch angedeutete Verbrennungskraftmaschine 3 auf, welche zum Beispiel ein Dieselmotor sein kann. Die Abtriebswelle 4 dieses Dieselmotors 3 treibt ein Getriebe 5 an, welches über eine Getrlebeausgangswelle 6 letztlich das angetriebene Rad 2 antreibt. Der Antriebsstrang 1 der Figur 1 weist außerdem ein hydraulisches System 7 auf, welches innerhalb einer strichpunktierte Linie in Figur 1 dargestellt ist. Das hydraulische System 7 umfasst ein hydraulisches Aggregat 8 sowie ein Speicherelement 9 zum Speichern von Druckenergie. Dieses Speicherelement 9 - auch Druckspeicher genannt - ist mit dem hydraulischen Aggregat 8 und einem Tank 10 über Leitungselemente 11 und Ventileinrichtungen 12 so miteinander verbunden, dass das hydraulische Aggregat 8 in seinem Pumpbetrieb Arbeitsfluid aus dem Bereich des Tanks 10 in den Bereich des Druckspeichers 9 fördern kann, und In seinem Motorbetrieb von unter Druck stehendem Arbeitsfluid aus dem Druckspeicher 9 angetrieben werden kann, wobei das in dem hydraulischen Aggregat 8 dann entspannte Arbeitsfluid In den Tank 10 zurückfließt.

In den Druckspeicher 9 wird das Arbeitsfluid gegen ein Gaspolster 13 in den Druckspeicher 9 gepresst, so dass die Druckenergie auch beziehungsweise im Wesentlichen oder ausschließlich in dem dadurch verdichteten Gas des Gaspolsters 13 gespeichert wird, Als Gas für das Gaspolster 13 kommen dabei thermodynamisch entsprechend stabile Gase in Betracht, beispielsweise Inertgase, wie zum Beispiel Stickstoff oder Edelgase, beispielsweise Helium oder ein Kältemittel mit einem niedrigen Adiabatenexponenten, beispielsweise von unter 1,4.

Zum Antrieb des hydraulischen Aggregats 8 dient eine Welle 14, welche das hydraulische System 7 mit dem Rest des Antriebsstrangs 1 verbindet. In Figur 1 ist die Verbindung dabei beispielhaft über das Getriebe 5 gezeichnet, es wäre auch eine Anbindung des hydraulischen Systems 7 an beliebigen anderen Stellen im Antriebsstrang denkbar, beispielsweise direkt am angetriebenen Rad 2 oder In einem hier nicht dargestellten Radsatzgetriebe oder einem sonstigen Getriebe. Grundsätzlich kann das hydraulische System 7 also an jeden beliebigen Nabenebtrieb irgendeines Getriebes in dem Antriebstrang 1 angekoppelt werden. Dies macht es zu einem sehr flexiblem System, welches problemlos auch In bestehenden Antriebsstränge nachgerüstet werden kann, die über einen entsprechenden Nebenabtrieb verfügen. Das hydraulische System kann dabei entweder direkt oder mit einem geeigneten Leistungsteiler zusammen mit einem anderen Nebenaggregat angekoppelt werden.

Bei dem Getriebe 5, welches auch für das Wechseln der übersetzungen genutzt werden wird und daher typischerweise als Gangwechseigetriebe ausgelegt ist, kann es sich beispielsweise um ein hydrodynamisches Getriebe handeln. Ein solches hydrodynamisches Getriebe hat dabei den Vorteil, dass auf Kupplungselemente zwischen dem Getriebe 5, der Verbrennungskraftmaschine 3 und dem angetriebenen Rad 2 verzichtet werden kann. Außerdem erlaubt das hydrodynamische Getriebe eine entsprechende stufenlose Wandlung von Drehzahl und Drehmoment. Da ein solches hydrodynamisches Getriebe In seinem Wandler jedoch unvermeidbare Verluste verursachen wird, ist es besonders günstig, wenn die Welle 14 sekundärseitig vom Wandler des hydrodynamischen Getriebes 5 beispielsweise in das Getriebe 5 selbst, wie hier dargestellt, oder an einer anderen Stelle des Antriebsstrangs sekundärseitig eingebunden wird.

Die Welle 14 besteht aus mehreren Teilen 14.1 und 14.2, welche durch eine Kupplung 15 mit den entsprechenden antriebsseitigen/hydraullkseitigen Kupplungshälften 15.1/15.2 verbunden sind. Damit ist das hydraulische System 7 schaltbar mit dem Antriebsstrang verbunden und kann aus diesem herausgeschaltet werden, wenn es nicht benötigt wird. Damit läuft das hydraulische System nur dann mit, wenn es auch wirklich benötigt wird. In den anderen Zelten ist es abgekuppelt und befindet sich im Stillstand. Damit kann ein geringer Verschleiß und damit eine höhere Zuverlässigkeit und Lebensdauer des hydraulischen Systems erzielt werden.

Typischerweise, insbesondere jedoch bei dem hier gewählten Beispiel eines Antriebsstrangs 1 für ein Schienenfahrzeug, sind über die Kupplung 15 hohe Leistungen zu übertragen. Deshalb werden bevorzugt Lamellenkupplungen oder Magnetkupplungen als Ausführungsformen solcher Kupplungselemente eingesetzt.

Die Funktionsweise des Antriebsstrangs 1 ist nun die eines parallelen hybriden Antriebsstrangs. Im Antriebsfall wird dabei Leistung von dem Dieselmotor 3 bereitgestellt und gelangt über das Getriebe 5 und die entsprechenden Wellen 4, 6 zu dem angetriebenen Rad 2. Außerdem kann bei geschlossener Kupplung 5 zusätzlich Leistung mittels des hydraulischen Aggregats 8 bereitgestellt werden, welches dann in seinem Motorbetrieb betrieben wird. Die benötigte Energie für das hydraulische Aggregat wurde in dem Druckspeicher 9 zuvor gespeichert und stammt aus zurück gewonnener Bremsenergie. Je nach Ausführung des hydrodynamischen Wandlers in dem Getriebe 5 wird so Leistung bei geschlossener Kupplung 15 entweder nur von dem hydraulischen Aggregat 8 an das angetriebene Rad 2 geliefert, um beispielsweise emissionsfrei Anzufahren, oder es wird Leistung sowohl von dem hydraulischen Aggregat 8 als auch von dem Dieselmotor 3 an das angetriebene Rad 2 geliefert, beispielsweise um das Anfahrmoment zu steigern. Bei vergleichbaren Ausführungen mit anderen Getriebebauarten 5 wäre hier entsprechend eine Kupplung beispielsweise im Bereich der Motorabtriebswelle 4 notwendig, um entsprechend die Wahl zu haben, entweder über den Dieselmotor 3 oder das hydraulische Aggregat 8 oder über beide die Antriebsleistung zur Verfügung zu stellen.

Bei längerfristigem eher konstanten Fahrbetrieb über eine größere Strecke wird dann bevorzugt der Dieselmotor 3 die Antriebsleistung alleine zur Verfügung stellen, während das hydraulische System 7 durch die offene Kupplung 15 abkoppelt ist und damit geschont wird.

Kommt es nun zu einem Bremsvorgang des Schienenfahrzeugs, wird die Kupplung 15 entsprechend geschlossen und am angetriebenen Rad 2 anfallende Bremsenergie gelangt über den Antriebsstrang in den Bereich des hydraulischen Aggregats 8. In diesem Bremsfall wird das hydraulische Aggregat 8 dann als Pumpe betrieben. Im Pumpbetrieb fördert das hydraulische Aggregat 8 Arbeitsfluid aus dem Bereich des Tanks 10 durch die Leitungen 11 und eine entsprechend geschaltete Ventileinrichtung 12 in den Druckspeicher 9. Im Druckspeicher 9 wird das Arbeitsmedium das Gaspolster 13 entsprechend komprimieren und damit in dem Gaspolster die in den Druckspeicher 9 eingebracht Druckenergie speichern. Zum Beispiel für Schienenfahrzeuge wie Triebwagen für den Regionalverkehr oder Rangierlokomotiven kann je nach üblicher Fahrstrecke und Einsatzzweck eine Speicherkapazität für eine Energiemenge beispielsweise von ca. 2 kWh vorgesehen werden, wobei dabei nur ca. 1-1,5 kWh in ständigen Zyklus ein- und ausgespeichert werden. Aufgrund der vergleichsweise hohen Masse von Schienefahrzeugen werden die Speicherkapazitäten üblicherweise über 0,5 kWh liegen.

Der kritische Teil liegt verfahrenstechnisch nun Im Schließen der Kupplung 15. Im Antriebsfall kann diese entsprechend geschlossen und dann der Leistungsfluss über den Antrieb gestartet werden, so dass dies kein Problem darstellt. Im Bremsfall wird jedoch die Kupplungshälfte 15.1, welche abtriebsseitig am Teil 14.1 der Welle 14 angeordnet ist, mit einer entsprechenden Drehzahl laufen. Beim Beispiel eines hydraulischen Systems 7 für den Antriebsstrang 1 eines Schienenfahrzeugs könnten dies beispielsweise 2.000 bis 4.000 U/min oder mehr sein. Wenn die zweite Kupplungshälfte 15.2 dagegen im Stillstand ist, wird es beim Einkuppeln hier typischerweise zu einem Versagen oder zu einem sehr hohen Verschleiß kommen.

Nun ist es Jedoch möglich, durch eine analoge Verschaltung der Leitungen 11 und der Ventileinrichtung 12 wie im Antriebsfall, das hydraulische Aggregat bei noch geöffneter Kupplung 15 zu beschleunigen. Das hydraulische Aggregat läuft dabei lastlos und muss lediglich die Reibungsverluste im hydraulischen Aggregat 8 selbst und in der Lagerung des Teils 14.2 der Welle 14 überwinden. Um die hlerfür benötigte Antriebsleistung bereitzustellen, wird in dem Druckspeicher 9 jeweils ein Restdruck vorgehalten, er wird im Antriebsfall also nie vollkommen entleert. Dieser Restdruck reicht dann aus, um das hydraulische Aggregat 8 lastlos im motorischen Betrieb soweit zu beschleunigen, dass die Kupplungshälften 15.1 und 15.2 gefahrlos eingekuppelt werden können. Über den Restdruck aus dem Druckspeicher 9 wird also durch einen vorübergehenden kurzfristigen Antrieb des hydraulischen Aggregats 8 eine Drehzahlsynchronisation zwischen den Kupplungshälften 15.1 und 15.2 erreicht. Danach, also sobald die Kupplung 15 geschlossen ist, wechselt der Betrieb des hydraulischen Aggregats 8 in den Pumpbetrieb, wozu die entsprechenden Leitungen und Ventileinrichtungen 12 In diesen umgeschaltet werden. Dann wird der Druck in dem Druckspeicher 9 durch diesen Pumpbetrieb wieder aufgebaut. Dadurch, dass die Drehzahlsynchronisation über den Restdruck nur dann erfolgt, wenn ein erneutes Befüllen des Druckspeichers 9 unmittelbar bevorsteht, kann in dieser Situation der Druckspeicher 9 zur Drehzahlsynchronisation entleert werden, da bekannt ist, dass ein erneutes Füllen des Druckspeichers unmittelbar bevorsteht, so dass in jedem Fall nach kürzester Zelt wieder Druck zur Verfügung stehen wird.

Da in dem Druckspelcher 9 nun ein gewisser Restdruck immer bzw. fast immer zur Verfügung steht, kann dieser Restdruck außer zur Drehzahlsynchronisation beim beginnenden Bremsvorgang auch als Steuerdruck für das gesamte hydraulische System verwendet werden. Dies hat den entscheidenden Vorteil, dass das hydraulische System 7 vollkommen autark von den entsprechenden Steuerdruckleitungen oder dergleichen ausgebildet werden kann. Das hydraulische System 7 kann also in bestehende Antriebsstränge problemlos nachgerüstet werden. Es ist selbstverständlich auch denkbar, weitere Stauerdrücke für den Antriebsstrang, beispielsweise für ein hydrodynamisch ausgebildetes Getriebe 5 über den Restdruck in dem Druckspeicher 9 zur Verfügung zu stellen.

Die Rückgewinnung der Bremsenergie mittels des hydraulischen Aggregats 8 in seinem Pumpbetrieb und das entsprechende Einspeichern dieser zurückgewonnenen Energie in dem Druckspeicher 9 hat außerdem den Vorteil, dass das hydraulische Aggregat 8 zum verschleißfreien Abbremsen des Schienenfahrzeugs im Bremsfall beiträgt. Für den Fahrer eines Schienenfahrzeugs wird dies nicht unmittelbar auffallen, da er lediglich die Bremse betätigt und die entsprechende Bremswirkung seines Fahrzeugs feststellt. Die benötigte Bremsenergie wird jetzt aber größtenteils über das hydraulische Aggregat 8 bereitgestellt und, wie erläutert, in Form der Druckenergie zwischengespeichert. Das Bremsen mittels des hydraulischen Aggregats 8 in seinem Pumpbetrieb stellt dabei eine Möglichkeit dar, verschleißfrei zu bremsen und insbesondere beim Abbremsen aus höheren Geschwindigkeiten die Vorteile einer verschlelβfreien Bremse mit den Vorteilen der Rekuperation von Bremsenergie zu verbinden.

Mit dem hier dargestellten System Ist das Abbremsen bis zum Stillstand möglich. Aus Sicherheitstechnischen Gründen sind jedoch in der Regel neben der Möglichkeit des Bremsens über das hydraulische Aggregat 8 weitere Bremselemente vorzusehen, beispielsweise allgemein übliche reibende Bremselemente, welche über Reibelemente Achse oder Rad bis zum Stillstand abbremsen. Es kann zusätzlich optional auch noch ein Retarder als weitere verschleißfreie Dauerbremse mit vorgesehen werden. Dies ist jedoch für die Erfindung nicht von weiterer Bedeutung, so dass auf die alternativen Möglichkeiten zum Bremsen, welche neben dem hydraulischen System 7 der Erfindung vorhanden sein können, nicht näher eingegangen wird.

Für den Tank 10 des hydraulischen Systems 7 gibt es grundsätzlich verschiedene Möglichkeiten der Ausgestaltung. So kann der Tank 10 beispielsweise einen Niederdruckbereich darstellen, welcher auf einem Druckniveau von beispielsweise ca. 100 bar liegt. Auch dieser Tank 10 wird In diesem Fall beispielsweise über ein hier nicht dargestelltes Gaspolster auf dem entsprechenden Druck gehalten, so dass dieser in seiner Größenordnung bestehen bleibt, auch wenn Arbeitsfluid aus dem Tank 10 entnommen wird. Das Druckniveau in dem Druckspeicher 9 wird dann beispielsweise bei einem höheren Arbeitsdruck von ca. 300 - 400 bar liegen. Das hydraulische Aggregat muss dann in seinem Pumpbetrieb diese Druckdifferenz aufbauen und kann diese in seinem motorischen Betrieb nutzen, um die benötigte Leistung an der Welle 14 bereitzustellen.

Neben einem solchen sogenannten geschlossenen System kann auch ein offenes System eingesetzt werden, bei dem der Tank 10 gegenüber der Atmosphäre offen ist, also auf demselben Druckniveau wie die Atmosphäre liegt. Bei entsprechendem Arbeitsdruckniveau In dem Druckspeicher 9 von wiederum ca. 300 - 400 bar kann dann durch das hydraulische Aggregat 8 eine entsprechend höhere Druckdifferenz genutzt werden, so dass faktisch bei gleicher Größe des Druckspeichers 9 mehr Energie gespeichert werden kann, da eine größere Druckdifferenz nutzbar zur Verfügung steht. Damit ist eine höhere Energieausnutzung und ein höheres Drehmoment möglich, als beim geschlossenen System. Um diese Druckdifferenz im Pumpbetrieb des hydraulischen Aggregats 8 realisieren zu können, wird eine Einrichtung zur Erzeugung eines Vordrucks vorgeschlagen, so dass die Verdichtung des in dem dann offenen Tank 10 befindlichen Arbeitsmedium faktisch in typischer Weise zwei Stufen erfolgt. Trotz des Vorsehens eines solchen Vordrucksystems baut das offenen System kleiner und leichter als eine geschlossenes System mit vergleichbarer Leistung.

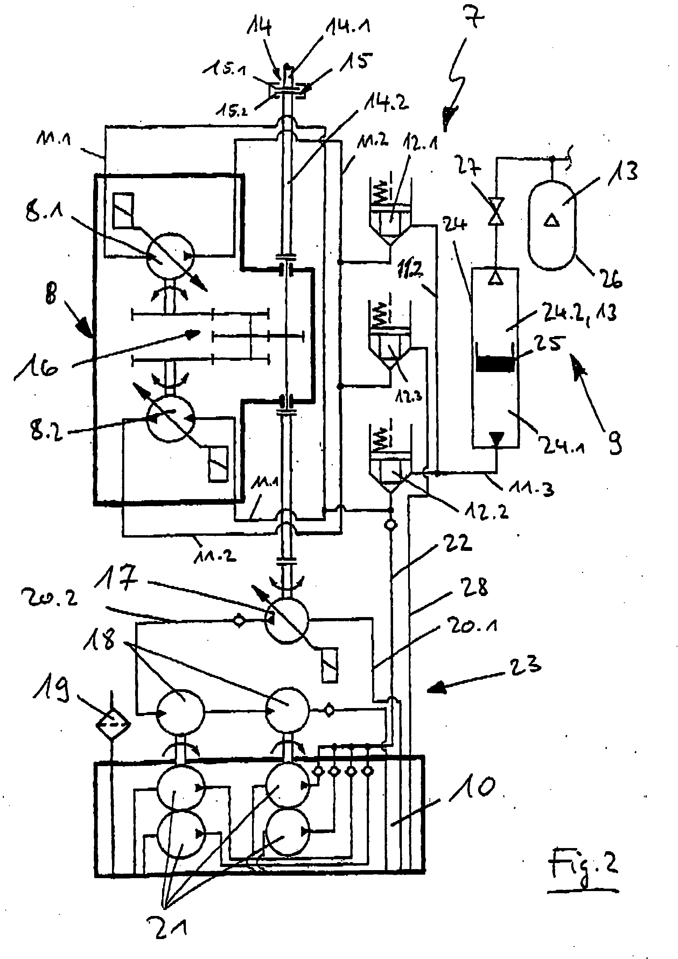

Ein solch offenes System In einer möglichen Ausgestaltungsvariante liegt der detaillierten Darstellung des hydraulischen Systems 7 in Figur 2 zugrunde. Darin ist eine detaillierte Darstellung eines möglichen Aufbaus des hydraulischen systems 7 gezeigt. Auf die Darstellung des Getriebes 5, des angetriebenen Rades 2 sowie der Verbrennungskraftmaschine 3 und der entsprechenden Wellen 4, 6 wurde verzichtet, Im oberen Teil der Figur 2 ist daher nur der antriebsseitige Teil 14.1 der Welle 14, das Kupplungselement 15 und der hydraulikseitige Teil 14.2 der Welle 14 nochmals dargestellt. In dem Aufbau des Ausführungsbeispiels in Figur 2 treibt die Welle 14 über ein entsprechendes Stirnradgetriebe 16 das hydraulische Aggregat 8 an, welches in dem hier dargestellten Ausführungsbeispiel aus zwei Hydraulikpumpen/-motoren 8.1, 8.2 besteht oder solche umfasst. Beide hydraulischen Pumpen/Motoren 8.1 und 8,2 weisen dabei ein variables Schluckvermögen auf und sind hinsichtlich ihres geförderten Volumenstroms stufenlos einstellbar.

Der hydraulikseitige Teil 14.2. der Welle 14, welche das hydraulische Aggregat 8 treibt, wird auf der der Kupplung 15 abgewandten Seite des Stirnradgetriebes 16 über das hydraulische Aggregat 8 hinaus verlängert. Dieser Abschnitt des Teils 14.2 der Welle 14 treibt in dem hier dargestellten Ausführungsbeispiel eine Regelpumpe 17 an, welche ebenfalls als stufenlos einstellbare Pumpe mit einem variablen Schluckvermögen ausgebildet ist. Der Teil 14.2. der Welle 14 kann dabei als Gelenkwelle ausgebildet sein, welche mehrerer Gelenke aufweist, wie dies in Figur 2 durch die parallelen quer zur Wellenachse verlaufenden Linien angedeutet ist. Der Aufbau als Gelenkwelle ermöglicht eine erhöhte Flexibilität bei der Anordnung der Komponenten.

Über die Regelpumpe 17 werden in dem hier dargestellten Ausführungsbeispiel zwei Lademotoren 18 angetrieben, wobei die Regelpumpe 17 dazu aus dem Tank 10, welcher hier wie durch den Luftfilter 19 angedeutet gegenüber der Atmosphäre offen ausgebildet ist, über ein Leitungselement 20.1 Arbeitsfluid, insbesondere Öl ansaugt, und dieses über ein Leitungselement 20.2 an die Lademotoren 18 liefert, bevor dieses über ein entsprechendes Rückschlagventil zurück In den offenen Tank 10 fließt. Die Lademotoren 8 haben bei diesem Aufbau den Vorteil, dass sie aufgrund der mit Ihr korrespondierenden Regelpumpe 17 mit ihrem regelbaren Volumenstrom als Lademotoren 18 für ein konstantes Volumen ausgelegt werden können. Über die Lademotoren 18 wird nun über eine Welle mechanisch eine Mehrzahl von Ladepumpen 21 angetrieben. Diese Ladepumpen 21 können ebenfalls als Konstantpumpen ausgebildet werden.

Grundsätzlich reicht für die Funktion eine Ladepumpe aus; durch die Mehrzahl von Ladepumpen 21 in dem offenen Tank 10 kann jedoch erreicht werden, dass die jeweiligen Ansaugöffnungen jede für sich genommen einen geringen Volumenstrom je Querschnittsfläche liefern, so dass in der Summe ein ausreichend großer aber glelchmäßigerer Volumenstrom durch die Ladepumpen 21 angesaugt und in die Leitung 22 gefördert werden kann. Ein weiterer Vorteil des Aufbau mit mehreren Ladepumpen 21 liegt darin, dass diese sehr flexibel in den Tank 10 Integriert werden können. Mehrer einzelne Pumpen sind nämlich viel leichter in das stellenweise ggf. sehr enge Tankvolumen einzubauen. Der Tank 10 selbst kann so sehr viel flexibler ausgestaltet und an den verfügbaren Bauraum angepasst werden, als wenn er eine große Ladepumpe aufnehmen müsste.

Der Aufbau mit der Regelpumpe 17, den Lademotoren 18, den Ladepumpen 21 bis hin zur Bereitstellung eines entsprechend unter Druck stehenden Arbeitsmediums in der Leitung 22 kann dabei als Einrichtung 23 zur Erzeugung eines Vordrucks oder als Vordrucksystem 23 bezeichnet werden. Dieses Vordrucksystem 23 dient dazu, das Arbeitsfluid, welches in dem Tank 10 bei atmosphärischem Druck vorliegt, soweit vorzuverdichten, dass mit einem vertretbaren Aufwand durch das hydraullsche Aggregat 8 im Bremsbetrieb des Antriebsstrangs 1 der erforderliche Druck zum Einspeichern der Energie in dem Speicherelement 9 erreicht werden kann. Insbesondere ermöglicht der Vordruck höhere Drehzahlen von bis über 4000 U/min des hydraulischen Aggregats 8, ohne das Kavitation In den hydraulischen Pumpen/Motoren 8.1 und 8.2 einsetzt. Diese hohen Drehzahlen und Leistungen sind ansonsten bei offenen System nicht zu erreichen.

Die Einrichtung 23 zur Erzeugung des Vordrucks kann dabei alternativ zu dem dargestellten Ausführungsbeispiel auch so ausgestaltet sein, dass der Antrieb der Lademotoren 18 beziehungsweise der Ladepumpen 21 auf eine andere Art erfolgt. Beispielsweise wäre es denkbar, dass die Ladepumpen 21 unmittelbar oder über geeignete mechanische und/oder hydrodynamische Getriebeelemente so mit der Welle 14 verbunden sind, dass der Antrieb direkt, beispielsweise über eine geelgnete Gelenkwelle oder dergleichen erfolgt.

Die Ausgestaltung mit einer Anbindung der Einrichtung 23 zur Erzeugung des Vordrucks an die Welle 14 beziehungsweise eine andere sich drehende Welle des hydraulischen Aggregats 8 hat dabei den Vorteil, dass der Vordruck über das Vordrucksystem 23 immer dann bereitgestellt wird, wenn das hydraulische Aggregat 8 als Pumpe in Betrieb ist. Außerdem wird die für den Vordruck benötigte Leistung ebenfalls aus der Bremsleistung erzeugt. Es ist also kein zusätzlicher Energieaufwand nötig. Da der Vordruck aus dem Vordrucksystem 23 grundsätzlich nur dann benötigt wird, wenn die beiden hydraulischen Pumpen/Motoren 8.1 und 8.2 im Pumpbetrieb laufen, also wenn der Bremsfall des Antriebsstrangs 1 vorliegt, müsste für den Antriebsfall, wenn die hydraulischen Pumpen/Motoren 8.1 und 8.2 im motorischen Betrieb laufen und ihren Druck aus dem Speicherelement 9 bekommen, ein entsprechendes Kupplungselement vorgesehen werden. Der hier dargestellte Aufbau umgeht dies dadurch, dass die Regelpumpe 17 so verstellt werden kann, dass diese im Antriebsfall des Antriebsstrangs 1 keinen Volumenstrom fördert und damit die Lademotoren 18 und die Ladepumpen 21 nicht betrieben werden. Diese entsprechende Verstallung der Regelpumpe 17 muss selbstverständlich auch bei der Drehzahlsynchronisation mittels des Restdrucks entsprechend vorliegen, da ein Anlaufen der Ragelpumpe 17 zu dem Zeitpunkt, in dem das hydraulische Aggregat 8 bzw. seine Pumpen/Motoren 8.1 und 8.2 noch hochgefahren werden, nicht notwendig ist. Vielmehr würde der Betrieb der Regelpumpe 17 in dieser Situation Leistung aus dem Restdruck aufnehmen, was so nicht notwendig und gewünscht ist. Wenn die Regelpumpe 17 also so verstellt wird, dass sie in diesem Zustand nicht angetrieben wird, so kann entsprechend Leistung eingespart werden und der in dem Speicherelement 9 vorzuhaltende Restdruck kann entsprechend verringert werden.

Grundsätzlich wäre es Jedoch auch denkbar, das Vordrucksystems 23 an eine andere Antriebsquelle anzuschließen, beispielsweise einen anderen Bereich des Antriebsstrangs, insbesondere in einem Bereich des Getriebes 5 oder einer der Wellen 4, 6. Auch dann wäre vorteilhaft über entsprechende Kupplungselemente sicherzustellen, dass das Vordrucksystem 23 nur dann arbeltet, wenn dieses auch benötigt wird, da ansonsten ein unnötiger Leistungsbedarf und Verschleiß entstehen würde.

Wenn das hydraulische System 7 nun im Bremsfall betrieben wird, also Bremsenergie über das angetriebene Rad 2 in den Antriebsstrang gelangt und die Kupplung 15 nach erfolgter Drahzehlsynchronisation über den Restdruck geschlossen ist, so wird, wie bereits erwähnt, über die Welle 14 das hydraulische Aggregat 8 und das Vordrucksystem 23 betrieben. In der Leitung 22 liegt dann ein entsprechender Vordruck des Vordrucksystems 23 an. Dieser gelangt über die mit 11.1 bezeichneten Leitungen In den Bereich der beiden hydraulischen Pumpen/Motoren 8.1 und 8.2, welche in diesem Betriebszustand als Pumpen betrieben werden. Sie verdichten das mit einem Vordruck beispielsweise von ca. 5 bis 20 bar, insbesondere über 7 bar vorliegende Arbeitsfluid auf einen Arbeitsdruck In einer Größenordnung beispielsweise von ca. 300 - 400 bar, aus wirtschaftlichen Erwägungen insbesondere 320 bar. Das Arbeitsfluid mit diesem hohen Druck von 320 bar gelangt dann über die mit 11.2 bezeichneten Leitungen und das mit 12.1 bezeichnete Ventil in den Bereich des Speicherelements 9. In dem Speicherelement 9 befindet sich ein Zylinder 24 mit einem entsprechenden beweglichen Element beziehungsweise Kolben 25. Das Arbeitsfluid wird über die Leitung 11.2 in den Bereich 24.1 des Zylinders 24 gedrückt und verschiebt dadurch den Kolben 25 in Richtung des anderen Bereichs 24.2 des Zylinders. Der Bereich 24.2 des Zylinders ist dabei mit Gas gefüllt, so dass der Kolben 25 gegen das Gaspolster 13 bewegt und entsprechend gespannt wird. Dieses Gaspolster 13 bildet aufgrund seiner Kompressibilität eine Art Feder, in welcher die Druckenergie gespeichert wird. Hierfür sind neben dem Gaspolster in dem Zyllndervolumen 24.2 entsprechende Gasspeichereinheiten 26 vorhanden, in welchen das Gaspolster 13 durch den Kolben 25 in dem Zylinder 24 entsprechend verdichtet wird. Das verdichtete Gaspolster 13 speichert somit die Druckenergie in den Gasspeichereinheiten 26.

Diese Gasspeichereinheiten 26 können dabei insbesondere als Gashochdrucktanks ausgebildet sein, wie sie aus dem Stand der Technik bekannt sind. Derartige Gashochdrucktanks sind als flaschenförmige Volumina ausgebildet und über geeignete Materialien, wie beispielsweise Kohlefasern oder Metall so ausgebildet, dass In ihnen das Gas mit sehr hohen Drücken, typischerweise bis 400, insbesondere jedoch auch bis ca. 800 bar problemlos gespeichert werden kann. Über ein entsprechendes Ventilelement 27 kann das unter hohem Druck stehende Gas entsprechend eingeschlossen werden. Beim typischen Einsatz des hydraulischen Systems 7 in einem wechselnden Antriebs- und Bremsbetrieb wird dies typischerweise nicht der Fall sein, so dass der Gebrauch der Ventile 27 im Allgemeinen auf die Phase beschränkt sein wird, in der der Antriebsstrang 1 beziehungsweise das mit ihm ausgerüstete Fahrzeug nicht in Betrieb ist oder gewartet wird.

Das Speichervolumen des Druckspeichers 9 kann einfach und effizient durch eine Vergrößerung der Anzahl an Gasspeichereinheiten 26 und ein Anpassen der Größe oder Anzahl der Zylinder 24 an die entsprechenden Leistungsanforderungen des Antriebsstrangs 1 angepasst werden. Hier sind einfach mehrere der Gasspeichereinheiten 26 parallel geschaltet, wie dies durch die hier in Figur 2 abgebrochen dargestellte Verbindungslinie angedeutet ist. Zum Beispiel für Schienenfahrzeuge wie Triebwagen für den Regionalverkehr oder Rangierlokomotiven wird eine Speicherkapazität für eine Energiemenge von ca. 2kWh vorgesehen werden, wobei dabei nur ca. 1-1,5 kWh in ständigem Zyklus ein- und ausgespeichert werden. Damit verbleibt In dem Druckspeicher 9 Im normalen Betrieb also immer ein gewisser Restdruck und eine Restölmenge. Dieser Restdruck kann nun genutzt werden, um die Drehzahlsynchronisation der hydraulikseitigen Kupplungshälfte 15.2 gegenüber der sich im Bremsbetrieb sehr schnell drehenden antrlebsseitigen Kupplungshälfte 15.1 vorzunehmen, bevor die Kupplungen geschlossen werden. Der Druck aus dem Druckspeicher 9 gelangt dazu über das Ventil 12.2 In den Bereich der beiden hydraulischen Pumpen/Motoren 8,1 und 8.2 und treibt diese entsprechend an. Das abfließende Arbeitsfluid wird über die Leitungen 11.2 und die Ventileinrichtung 12.3 In den offenen Tank 10 zurückgeleitet. Beim Antrieb sollte, wie bereits erwähnt, die Regelpumpe 17 so eingestellt werden, dass diese mit minimaler Reibung mitläuft, da zu diesem Zeitpunkt kein Vordruck erforderlich ist.

Im dargestellten Ausführungsbeispiel werden über das Ventil 12.2, welches auch zum Betrieb des hydraulischen Aggregats 8 im Antriebsfall dient, beide hydraulischen Pumpen/Motoren 8.1 und 8.2 versorgt. Für die reine Drehzahisynchronisation wäre es jedoch auch denkbar, das einer der belden in seinem Schluckvermögen verstellbaren hydraulischen Pumpen/Motoren 8.1 und 8.2 so eingestellt wird, dass er mit minimaler innerer Reibung mitläuft, während lediglich der andere der beiden hydraulischen Pumpen/Motoren 8.1 und 8.2 angetrieben wird, um den Teil 14.2 der Welle 14 und die damit verbundene Kupplungshälfte 15.2 auf die angesprochene Mindestdrehzahl zu beschleunigen. Alternativ zu dieser Einstellung wäre auch eine weitere Ventileinrichtung denkbar, welche die beiden Leitungsteile 11.1, welche zu den jeweiligen Pumpen/Motoren 8.1 und 8.2 führen, entsprechend voneinander trennt. Aufgrund der hohen Drücke sind derartige Ventileinrichtungen jedoch aufwendig und teuer, so dass über eine geeignete Einstellung eines der Pumpen/Motoren 8.1 und 8.2 ein ausreichender Effekt in einfacher- und effizienterweise erzielt werden kann.

Die hydraulikseitige Kupplungshälfte 15.2 wird auf eine vorgegebene Mindestdrehzahl beschleunigt, welche insbesondere bei einem Wert von 30 - 40 % der Maximaldrehzahl, welche im anderen Teil 14.1 der Welle 14 und damit an der anderen Kupplungshälfte 15.1 anfallen kann, liegt. Sobald diese Mindestdrehzahl erreicht ist, kann ohne allzu großen Verschleiß und ohne eine Funktionsstörung befürchten zu müssen, das Kupplungselement 15 eingekuppelt werden. Sofern ein Drehzahlsensor in dem Antriebsstrang 1. vorhanden ist, so dass die momentane Drehzahl des Teils 1.4.1 der Welle 14 bekannt ist, so kann die Mlndestdrehzahl auch mit 30 %, bevorzugt jedoch über 40 % der augenblicklichen Drehzahl auf der abtriebsseitigen Kupplungsseite 15.1 entsprechend vorgegeben werden. Es bietet sich an, die Mindestdrehzahl In einem elektronischen Steuersystem, über welches typischerweise jeder Antriebsstrang verfügt, entsprechend abzulegen, dies kann beispielsweise durch eine Berechnung aus einer Drehzahl erfolgen, weiche in dem Antriebsstrang gemessen wird, oder es kann ein entsprechendes Kennfeld hinterlegt sein, um für die verschiedenen Zustände, sofern dies erforderlich ist, die entsprechenden Mindestdrehzahlen vorzugeben.

In einer sehr einfachen Ausgestaltung kann es jedoch auch vorgesehen sein, eine festgesetzte Mindestdrehzahl vorzugeben und fest in das System zu implementieren.

Der In dem Speicherelement 9 jeweils vorliegende Restdruck kann außerdem noch als Steuerdruck für das hydraulische System verwendet werden. Damit kann auf ein eigenes Steuerdrucksystem und auf den dafür benöügten Energiebedarf verzichtet werden. Neben der Energieelnsparung hat dies den Vorteil, dass das hydraulische System somit völlig autark ausgebildet werden kann. Vor allem bei der oben schon erwähnten Ausführung als Nachrüstsystem ist ein solches vollkommen autarkes System natürlich besonders günstig.

Im Antriebsfall des Antriebsstrangs 1 kann nun die in dem Druckspeicher 9 zwischengespeicherte Bremsenergie wieder zum Antrieb genutzt werden. Hierfür ist das Einspeisen von zusätzlicher Energie beispielsweise für einen Boostbetrieb beim Anfahren oder Beschleunigen ebenso denkbar, wie ein entsprechender Betrieb, bei dem der Dieselmotor 3 deutlich kleiner dimensioniert werden kann als Im Stand der Technik, da für die benötigten Leistungsspitzen die Energie aus dem hydraulischen System 7 zur Verfügung steht. Alles in allem kann so die Energleeffizienz des Antriebsstrangs an sich deutlich erhöht werden, insbesondere da ein Großteil der Bremsenergie rückgespeichert werden kann und nicht In Form von Reibungswärme verloren geht. Dies spielt insbesondere dann eine entscheidende Rolle, wenn das Schienenfahrzeug in einem sehr dynamischen Einsatz mit vielen Beschleunigungs- und Bremsphasen eingesetzt wird, beispielsweise im Nahverkehr oder zu Rangierarbelten auf einem Rangierbahnhof. Da insbesondere Rangierlokomotiven im Allgemeinen über Betongewichte verfügen, um über diese Adhäsionsmassen die erforderliche Antriebsleistung auf die Schiene zu bekommen, kann das System anstelle der Betongewichte eingesetzt werden. Sein unvermeidbares zusätzliches Gewicht gegenüber einem nicht hybridisierten Antriebsstrang ist dann sogar von Vorteil. Auch für Nachrüstsysteme ist dies vorteilhaft, da Bauraum und Gewicht der Betonteile durch das hydraulische System ersetzt werden kann. Grundsätzlich ist es dabei möglich, das hydraulische Aggregat 8 in jede Drehrichtung drehen zu lassen, hierfür wäre nur ein weiteres Ventil neben dem Ventil 12.2. notwendig, welches hier jedoch nicht dargestellt ist. Dies erlaubt das Einbinden des hydraulischen Systems 7 in den Antriebsstrang 1 an einer Stelle, an der die von der Verbrennungskraftmaschine 3 kommende Leistung bereits ein Richtungsumkehrgetriebe passiert hat.

Wenn nun Leistung für den Antriebsfall benötigt wird, so wird diese über die Welle 14 zurück in den eigentlichen Antriebsstrang 1 geleitet und steht dort dann an dem oben bereits beschriebenen möglichen Punkt zur Verfügung. Um diese Antriebsleistung durch das hydraulische System 7 zur Verfügung zu stellen, werden bei mit entsprechender Druckenergie befülltem Druckspeicher 9 das Ventil 12.2 entsprechend geöffnet, während das Ventil 12.1 im vorliegenden Beispiel selbsttätig geschlossen wird. In dieser Situation ist kein Vordruck vom Vordrucksystem 23 mehr erforderlich, so dass dieser durch eine entsprechende Einstellung der Regetpumpe 17 und damit ein Außerbetriebsetzen der Lademotoren 18 und der Ladepumpen 21 abgestellt wird. Das unter Druck stehende Gas in dem Gaspolster 13 schiebt dann den Kolben 25 in Richtung des Raumes 24.1. des Zylinders 24. Über die Leitung 11.3 drückt der Kolben 25 dann das Arbeitsfluid unter hohem Druck über das Ventil 12.2 und die Leitungen 11,1 zu den jeweiligen hydraulischen Pumpen/Motoren 8.1 und 8.2. Diese werden von dem hohen Arbeitsdruck motorisch angetrieben und Ihre Antriebsleistung gelangt über das Stirnradgetriebe 16 an den hydraullkseltigen Teil 14.2 und über die Kupplung 15 an den antriebsseitigen Teil 14.1. der Welle 14.

Die beiden hydraulischen Pumpen/Motoren 8.1 und 8.2 in dem Hydraulikaggregat 8 können dabei die gesamte Druckdifferenz zwischen dem sehr hohen Arbeitsdruck und dem Umgebungsdruck in dem offenen Tank 10 nutzen, so dass bei vergleichsweise geringer Baugröße und geringem Bauvolumen eine hohe Antrlebsleistung zur Verfügung gestellt werden kann. Über die Leitungselemente 11.2 gelangt das Arbeitsfluid dann nach den beiden hydraulischen Pumpen/Motoren 8.1 und 8.2 über das Ventil 12.3 und gegebenenfalls ein entsprechendes Drosselelement (nicht dargestellt) zurück in den gegenüber der Atmosphäre offenen Tank 10.

Das hydraulische System 7 kann außerdem weitere Ventileinrichtungen, Sicherheitsventile, Wartungsanschlüsse, Sensoren oder dergleichen aufweisen. Um die Darstellung übersichtlicher zu gestalten wurde auf derartige Elemente, ebenso verzichtet, wie auf durch einschlägige Vorschriften vorgeschriebene Sicherheitsventile und dergleichen.

Der mittels des hydraulischen Systems 7 zu einem Parallelhybrid ergänzte Antriebsstrang kann somit für die hohen zum Beispiel bei Schienenfahrzeugen benötigten Leistungen einen sehr energieefflzlenten Antriebsstrang realisieren, welche von vorne herein bei neuen Schienenfahrzeugen eingeplante werden kann, welcher jedoch auch einfach In Bestehende Schienenfahrzeuge nachgerüstet werde kann.

## Patentansprüche

1. Verfahren zum Betreiben eines Antriebsstrangs, insbesondere für ein Schienenfahrzeug, mit:
1.1 einem Abtrieb:
1.2 zumindest einem hydraulischen Aggregat, welches über ein Kupplungselement schaltbar mit dem Abtrieb verbunden werden kann;
1.3 zumindest einem Speicherelement zum Speichern von Druckenergie, welches hydraulisch schaltbar so mit dem hydraulischen Aggregat verbunden wird, dass das Speicherelement im Pumpbetrieb durch das hydraulische Aggregat befüllt wird, und Im Motorbetrieb durch Druck aus den Speicherelement angetrieben wird; wobei
1.4 im Antriebsfall Leistung entweder ausschließlich oder ergänzend zu einem weiteren optionalen Antriebsaggregat von dem dann aus dem Speicherelement motorisch betriebenen hydraulischen Aggregat über das geschlossene Kupplungselement zum Abtrieb geliefert wird; und
1.5 im Bremsfall Leistung von dem Abtrieb über das geschlossene Kupplungselement zum dem hydraulischen Aggregat gelangt, welches dann im Pumpbetrieb das Speicherelement befüllt;
**dadurch gekennzeichnet, dass** der Antriebsstrang so betrieben wird, dass
1.6 das Speicherelement (9) im Antriebsfall nicht vollständig entleert wird; und
1.7 mit dem Eintreten des Bremsfall zuerst Druck aus dem Speicherelement (9) zum motorischen Antrieb des hydraulischen Aggregats (8) bei geöffnetem Kupplungselement (15) genutzt wird, bis das hydraulische Aggregat (8) und die damit verbundene Seite des Kupplungselements (15.2) eine vorgegebene Mindestdrehzahl erreicht hat: bevor
1.8 das Kupplungselement (15) geschlossen und In den Pumpbetrieb des hydraulischen Aggregats (8) gewechselt wird.

2. Verfahren nach Anspruch 1, **dadurch gekennzeichnet, dass** ein weiteres optionales Antriebsaggregat vorhanden und als Verbrennungskraftmaschine (3) ausgebildet ist, welches über wenigstens ein Getriebe (5) mit dem hydraulischen Aggregat (8) in der Art eines Parallelhybrids zusammengeschaltet wird.

3. Verfahren nach Anspruch 1 oder 2, **dadurch gekennzeichnet, dass** als Kupplungselement (15) eine Magnetkupplung eingesetzt wird.

4. Verfahren nach Anspruch 1 oder 2, **dadurch gekennzeichnet, dass** als Kupplungselement (15) eine Lamellenkupplung eingesetzt wird.

5. Verfahren nach einem der Ansprüche 1 bis 4, **dadurch gekennzeichnet, dass** die vorgegebene Mindestdrehzahl bei zumindest 30 % bevorzugt über 40 % der Maximaldrehzahl der Abtriebsseite des Kupplungselements (15.1) liegt.

6. Verfahren nach einem der Ansprüche 1 bis 4, **dadurch gekennzeichnet, dass** die vorgegebene Mindestdrehzahl abhängig vom Betriebszustand verändert wird, so dass diese immer bei zumindest 30 % bevorzugt über 40 % der augenblicklichen Drehzahl der Abtriebsselte des Kupplungselements (15.1) liegt.

7. Verfahren nach Anspruch 6, **dadurch gekennzeichnet, dass** die vorgegeben Mindestdrehzahl durch ein Kennfeld vorgegeben wird, welches in einem Steuerungssystem des Antriebsstranges (1) gespeichert ist.

8. Verfahren nach einem der Ansprüche 1 bis 7, **dadurch gekennzeichnet, dass** der Leistungsfluss zwischen dem hydraulische Aggregat (8) und dem Abtrieb (2) über wenigstens eln Getriebeelement (5) verläuft.

9. Verfahren nach einem der Ansprüche 1 bis 8, **dadurch gekennzeichnet, dass** der in dem Speicherelement (9) vorliegende Restdruck als Steuerdruck für die hydraulische Steuerung in dem Antriebsstrang, zumindest in dem hydraulischen System (7) aus hydraulischem Aggregat (8) und Speicherelement (9), mitgenutzt wird.

## Claims

1. A method for operating a drive train, in particular for a track vehicle, with:
1.1 a power take-off;
1.2 at least one hydraulic unit, which can be connected in an engageable manner to the power take-off via a coupling element;
1.3 at least one storage element for storing kinetic energy, which is connected hydraulically in an engageable manner to the hydraulic unit in such a way that the storage element can be filled by the hydraulic unit in pumping mode, and is driven by the pressure derived from the storage element in engine mode; wherein
1.4 power is delivered in service either exclusively or to complement the drive unit, from the hydraulic unit operated by motor by the storage element to the power take-off over the closed coupling element; and
1.5 in braking mode power reaches the hydraulic unit from the power take-off over the closed coupling element, which then fills the storage element in pumping mode;
**characterised in that** the drive train is operated in such a way that the
1.6 storage element (9) is not emptied completely in service; and
1.7 when starting the braking mode pressure from the storage element (9) is used first of all for motorised actuation of the hydraulic unit (8) when the coupling element (15) is opened, until the hydraulic unit (8) and the associated side of the coupling element (15.2) have reached a preset minimal rotation speed; before
1.8 the coupling element (15) is closed and switched to the pumping mode of the hydraulic unit (8).

2. A method according to claim 1, **characterised in that** an additional optionally drive unit is available and designed as an internal combustion machine (3), which is interconnected via at least one transmission (5) to the hydraulic unit (8) in the form of a parallel hybrid.

3. A method according to claim 1 or 2, **characterised in that** a magnetic clutch is used as a coupling element (15).

4. A method according to claim 1 or 2, **characterised in that** a lamella clutch is used as a coupling element (15).

5. A method according to any of the claims 1 to 4, **characterised in that** the preset minimal rotation speed lies around at least 30% preferably above 40% of the maximum rotation speed of the power take-off side of the coupling element (15.1).

6. A method according to any of the claims 1 to 4, **characterised in that** the preset minimal rotation speed is modified according to the operating mode so that said speed always lies around at least 30% preferably above 40% of the current rotation speed of the power take-off side of the coupling element (15.1).

7. A method according to claim 6, **characterised in that** the preset minimal rotation speed is specified by a characteristic field, which is stored in a control system of the drive train (1).

8. A method according to any of the claims 1 to 7, **characterised in that** the power flow between the hydraulic unit (8) and the power take-off (2) runs via at least one transmission element (5).

9. A method according to any of the claims 1 to 8, **characterised in that** the residual pressure present in the storage element (9) is also used as a control pressure for hydraulic control in the drive train, at least in the hydraulic system (7) composed of a hydraulic unit (8) and a storage element (9).

## Revendications

1. Procédé d'utilisation d'un train d'entraînement, en particulier pour véhicule sur rails, avec:
1.1 une prise de force;
1.2 au moins un groupe hydraulique, qui peut se connecter à la prise de force de manière embrayable par le biais d'un élément d'accouplement;
1.3 au moins un élément de stockage destiné au stockage d'énergie cinétique, qui est connecté hydrauliquement de manière embrayable au groupe hydraulique de telle sorte que l'élément de stockage est remplit en mode pompage par le groupe hydraulique; et est entraîné par la pression provenant de l'élément de stockage avec le moteur en service; alors que
1.4 en mode entraînement la puissance est délivrée à la prise de force soit exclusivement soit en complément d'un autre groupe d'entraînement en option à partir d'un groupe hydraulique entraîné par le moteur de l'élément de stockage par le biais de l'élément d'accouplement fermé; et
1.5 en cas de freinage la puissance parvient au groupe hydraulique à partir de la prise de force par le biais de l'élément d'accouplement fermé, qui remplit alors l'élément de stockage en mode pompage;
**caractérisé en ce que** le train d'entraînement est entraîné de telle sorte que
1.6 l'élément de stockage (9) n'est pas vidé complètement en mode entraînement; et
1.7 au début du mode freinage la pression provenant de l'élément de stockage (9) s'utilise tout d'abord pour assurer l'entraînement motorisé du groupe hydraulique (8) avec l'élément d'accouplement ouvert (15), jusqu'à ce que le groupe hydraulique (8) et le côté de l'élément d'accouplement (15.2) associé à celui-ci aient atteint une vitesse de rotation minimale prédéterminée; avant
1.8 que l'élément d'accouplement (15) se ferme et passe en mode pompage du groupe hydraulique (8).

2. Procédé selon la revendication 1, **caractérisé en ce qu'**un autre groupe d'entraînement en option est présents et conçu comme moteur à combustion (3), qui est interconnecté au groupe hydraulique (8) sous forme de parallèle hybride par le biais d'au moins une transmission (5).

3. Procédé selon la revendication 1 ou 2, **caractérisé en ce qu'**un embrayage magnétique s'utilise comme élément d'accouplement (15).

4. Procédé selon la revendication 1 ou 2, **caractérisé en ce qu'**un embrayage à lamelles s'utilise comme élément d'accouplement (15).

5. Procédé selon l'une des revendications 1 à 4, **caractérisé en ce que** la vitesse de rotation minimale prédéterminée est de l'ordre d'au moins 30% de préférence supérieure à 40% de la vitesse de rotation maximale du côté prise de force de l'élément d'accouplement (15.1).

6. Procédé selon l'une des revendications 1 à 4, **caractérisé en ce que** la vitesse de rotation minimale prédéterminée est modifiée en fonction du mode d'exploitation de telle sorte que ladite vitesse est de l'ordre d'au moins 30% de préférence supérieure à 40% de la vitesse de rotation courante du côté prise de force de l'élément d'accouplement (15.1).

7. Procédé selon la revendication 6, **caractérisé en ce que** la vitesse de rotation minimale prédéterminée est indiquée par un diagramme caractéristique, qui est stocké dans un système de commande du train d'entraînement (1).

8. Procédé selon l'une des revendications 1 à 7, **caractérisé en ce que** le circuit de puissance passe entre le groupe hydraulique (8) et la prise de force (2) par le biais d'au moins un élément d'engrenage (5).

9. Procédé selon l'une des revendications 1 à 8, **caractérisé en ce que** la pression résiduelle présente dans l'élément de stockage (9) s'utilise également comme pression de commande pour assurer la commande hydraulique dans le train d'entraînement, au moins dans le circuit hydraulique (7) composé du groupe hydraulique (8) et de l'élément de stockage (9).
